# EUROPÄISCHE PATENTSCHRIFT

(11) **EP 2 897 819 B1**
(45) Veröffentlichungstag und Bekanntmachung des Hinweises auf die Patenterteilung: **25.05.2016**
(21) Anmeldenummer: 13745398.1
(22) Anmeldetag: 01.08.2013
(51) Int. Cl.: B60G 11/32, B60G 3/28

(54) **FAHRZEUG-RADAUFHÄNGUNG DER SCHWERTLENKER-BAUART**
VEHICLE-BICYCLE SUSPENSION OF CONTROL BLADE DESIGN
SUSPENSION DE VÉHICULE DE TYPE À BRAS À LAMES

(30) Priorität: 19.09.2012 DE 102012216822
(43) Veröffentlichungstag der Anmeldung: 29.07.2015
(73) Patentinhaber: Bayerische Motoren Werke Aktiengesellschaft, 80809 München (DE)
(72) Erfinder: KETTENBERGER, Johann, 84543 Winhoering (DE)
(86) Internationale Anmeldenummer: PCT/EP2013/066227
(87) Internationale Veröffentlichungsnummer: WO 2014/044455

(56) Entgegenhaltungen:
- EP-A1- 0 178 771
- EP-A2- 1 419 909
- EP-B1- 0 136 563
- DE-A1- 3 924 950
- DE-A1-102011 112 053
- DE-B4- 19 933 432
- GB-A- 2 182 001
- JP-A- H0 238 108
- JP-A- S63 101 113
- JP-U- H0 325 304
- US-A- 4 143 888

## Beschreibung

Die Erfindung betrifft eine Fahrzeug-Radaufhängung der Schwertlenker-Bauart mit drei im wesentlichen in Fahrzeug-Querrichtung orientierten radführenden Lenkern sowie mit einem im wesentlichen starr am Radträger befestigten und dessen Querbewegung gegenüber dem Fzg.-Aufbau kaum einschränkenden Längslenker. Zum Stand der Technik wird neben der EP 0 136 563 B1 oder der DE 102011 112 053 A1 auf die DE 199 33 432 B4 verwiesen. Während die letztgenannte Schrift eine besondere Radaufhängung mit einem in Faserverbundwerkstoff ausgeführten und als Blattfederung ausgebildeten Lenker zeigt, sind in den beiden erstgenannten Schriften Fahrzeug-Radaufhängungen der Schwertlenker-Bauart gezeigt.

Ein zunehmendes Erfordernis bei der Weiterentwicklung von Hinterachsen insbesondere für Personenkraftwagen ist bei möglichst gutem fahrdynamischen Verhalten die Reduzierung von Bauraumbedarf und Gewicht. Darüber hinaus ist es vorteilhaft, wenn für die Anordnung der einzelnen Achskomponenten zusätzliche Spielräume bestehen, so dass beispielsweise unterschiedliche Gestaltungen des Hinterwagens einer Fahrzeug-Baureihe dargestellt werden können oder unterschiedliche Fahrwerksregelsysteme wahlweise einfach integriert werden können. Diesbezüglich für eine dem Fachmann bekannte Schwertlenkerachse eine Verbesserung aufzuzeigen ist Aufgabe der vorliegenden Erfindung.

Die Lösung dieser Aufgabe besteht in einer Fahrzeug-Radaufhängung der Schwertlenker-Bauart mit drei im wesentlichen in Fahrzeug-Querrichtung orientierten radführenden Lenkern sowie mit einem im wesentlichen starr am Radträger befestigten und dessen Querbewegung gegenüber dem Fzg.-Aufbau kaum einschränken Längslenker, der im wesentlichen starr am Fahrzeugaufbau befestigt ist und somit auch die Funktion einer Tragfeder zwischen dem Radträger und dem Fahrzeug-Aufbau übernimmt. Vorteilhafte Weiterbildungen sind Inhalt der Unteransprüche.

Zunächst sei kurz auf den Begriff der "im wesentlichen starren Befestigung" eingegangen, die für den besagten Längslenker am Radträger und am Fahrzeug-Aufbau vorgesehen ist. Mit diesem Begriff soll zum Ausdruck gebracht werden, dass der Lenker gegenüber dem ihn tragenden Element, d.h. gegenüber dem Radträger und gegenüber dem Fahrzeug-Aufbau im jeweiligen Befestigungspunkt keinen Bewegungsfreiheitsgrad im eigentlichen Sinne besitzt, so dass hier kein irgendwie geartetes Gelenk, sondern praktisch eine starre Verbindung vorliegt. Insbesondere zur Steigerung des Abrollkomforts und/oder zur Verbesserung der Akustik im Fahrzeug kann es jedoch empfehlenswert sein, den Längslenker geringfügig elastisch am Fahrzeugaufbau und/oder am. Radträger befestigen. Ein definierter Freiheitsgrad liegt auch dann nicht vor und es übernimmt die genannte elastische Lagerung insbesondere eine Dämpfungsfunktion mechanisch hinsichtlich kurzer harter Stöße und/oder akustisch hinsichtlich ansonsten übertragener Abrollgeräusche. Mit einer solchen geringfügig elastischen Befestigung ist sodann der Längslenker "im wesentlichen starr" am Radträger und/oder am Fahrzeug-Aufbau befestigt.

Im weiteren näher auf die kennzeichnenden Merkmale des unabhängigen Patenanspruchs eingehend lässt sich bekanntlich mit einer sog. Schwertlenkerachse mit drei im wesentlichen in Fahrzeug-Querrichtung orientierten radführenden Lenkern und einem im wesentlichen in Fahrzeug-Längsrichtung orientierten Lenker, der am Radträger befestigt ist und dessen Bewegungsfreiheit in Fahrzeug-Querrichtung jedenfalls soweit sich dieser aufgrund der den Radträger weiterhin führenden Querlenker bewegen kann, nicht nennenswert einschränkt, ein gutes fahrdynamisches Verhalten darstellen.

Für eine neben den radführenden Lenkern weiterhin erforderliche Tragfeder, über die der Fahrzeug-Aufbau anteilig auf dem Radträger abgestützt ist, sind verschiedene Anordnungen bekannt. So ist bei der eingangs erstgenannten EP 0 136 563 B1 die Tragfeder direkt am Radträger abgestützt, während bei der eingangs weiterhin genannten DE 102011 112 053 A1 die dort nicht gezeigte Tragfeder mit hoher Wahrscheinlichkeit auf einem hinteren unteren Querlenker abgestützt ist. Letzterer muss daher relativ massiv ausgeführt werden, was sowohl verhältnismäßig viel Bauraum beansprucht als auch das Gewicht des Fahrzeugs nennenswert erhöht. Weiterhin kommt es insbesondere bei angetriebenen Achsen zu einer Einschränkung hinsichtlich der möglichen Anordnung desjenigen Querlenkers, welcher die Tragfeder trägt, um einen ausreichenden Freigang zwischen der Tragfeder und der Antriebswelle des Rades zu erreichen. Stützt sich hingegen nach einer alternativen Bauart die Tragfeder direkt auf dem Radträger ab, so bestehen die vorgenannten Nachteile nicht, jedoch ragt dann die Tragfeder in Vertikalrichtung betrachtet sehr weit nach oben, was bei Hinterachsen insbesondere von Personenkraftwagen für die Darstellung eines Hinterwagens mit großem Kofferraum, großer Durchladebreite und günstiger Trägerstruktur ungünstig ist.

Vorliegend ist daher vorgeschlagen, die Tragfederfunktion in den Längslenker einer sog. Schwertlenkerachse zu integrieren, welcher im Stand der Technik üblicherweise in Fzg.-Querrichtung betrachtet relativ biegeweich ausgeführt ist. Dieser im Stand der Technik in Fzg.-Querrichtung biegeweiche Längslenker ist im Stand der Technik mit seinem dem Radträger abgewandten Ende um die Fzg.-Querachse verschwenkbar direkt oder indirekt am Fahrzeug-Aufbau befestigt, um ein Ein- und Ausfedern des Rades, d.h. dessen Vertikalbewegung zu ermöglichen. Nach der vorliegender Erfindung ist nun dieser Längslenker nicht nur am Radträger, sondern auch am Fahrzeug-Aufbau (abgesehen von einer gegebenenfalls geringfügigen elastischen Lagerung) im wesentlichen starr befestigt und bei Betrachtung in Fzg.-Querrichtung unter entsprechender Krafteinwirkung selbst derart signifikant elastisch verformbar, dass das Rad in Vertikalrichtung über seinem üblichen Federweg oder Radhub verlagerbar ist. Über diese unter Krafteinwirkung darstellbare elastische Verformung kann dieser Längslenker somit die Funktion der Tragfeder zumindest anteilig übernehmen.

Während die erfindungsgemäß vorgeschlagene funktionale Integration von einer der Tragfeder in den Längslenker prinzipiell mit unterschiedlichen Werkstoffen und Ausgestaltungen des Längslenkers sowie Fertigungsverfahren für diesen Längslenker darstellbar ist, ergeben sich erfindungsgemäß zusätzliche Gewichtsvorteile, wenn diese genannte Verformbarkeit des Längslenkers bei geeigneter Formgebung dadurch hergestellt wird, dass dieser Längslenker in einem Faserverbundwerkstoff ausgeführt ist. Mit einer solchen Ausführung ist bei geeigneter Formgebung vorteilhafterweise auch die geforderte Elastizität in Fahrtzeug-Querrichtung leichter darstellbar.

Ein erfindungsgemäßer Längslenker in einer Fzg.-Hinterachse der Schwertlenker-Bauart schränkt also die Bewegbarkeit des Radträgers lediglich in Fzg-Längsrichtung signifikant ein, während dessen Bewegbarkeit in Fahrzeug-Querrichtung durch einen erfindungsgemäßen Längslenker kaum eingeschränkt wird und dessen Bewegbarkeit in Vertikalrichtung nur soweit eingeschränkt wird, als dieser Längslenker die Funktion einer zwischen dem Radträger und dem Fzg.-Aufbau eingespannten Tragfeder zumindest anteilig übernimmt. Es kann also neben dem erfindungsgemäßen Längslenker noch ein weiteres Federelement an einer erfindungsgemäßen Fahrtzeug-Radaufhängung zwischen dem Fahrzeug-Aufbau und (letztlich) dem Radträger eingespannt sein, welches dann aber wesentlich geringer dimensioniert sein kann als im üblichen Stand der Technik (einer Schwertlenker-Achse). Vorzugsweise jedoch übernimmt ein erfindungsgemäßer Längslenker die Funktion einer ansonsten üblichen Tragfeder vollständig, so dass gemäß dem Stand der Technik nur noch eine in einem der Tragfeder funktional parallel geschalteten Schwingungsdämpfer in diesem integrierte Druckanschlagfeder und/oder Zuganschlagfeder vorgesehen ist, die zwischen dem Radträger und dem Fahrzeug-Aufbau wirkt bzw. wirksam werden können.

Zur Darstellung verschiedener Tragfederraten sowie zur Anpassung an unterschiedliche Fahrzeuggewichte in Konstruktionslage kann vorgesehen sein, den erfindungsgemäßen Längslenker mit mehreren Lenkeräste auszuführen, insbesondere wenn die geometrischen und werkstofftechnischen Gestaltungsspielräume mit einem einzigen Lenkerarm oder Lenkerast nicht ausreichend sind, um die geforderte Anwendungsspreizung der Achse zu erfüllen. Es kann somit der besagte Längslenker durch zwei oder mehrere in einem weiten Bereich einzelnen Lenkerteilen gebildet sein, die vorzugsweise im wesentlich in einer gemeinsamen Vertikalebene liegen, womit zum einen ein erheblicher Freiheitsgrad hinsichtlich der geometrischen Gestaltung dieses Längslenkers und somit auch seiner Federungs- und sonstigen Eigenschaften besteht. Zum anderen kann insbesondere dann, wenn das erste Lenkerteil des Längslenkers oberhalb und das zweite Lenkerteil unterhalb der Radmitte am Radträger befestigt ist, eine Rad-Antriebswelle zwischen diesen beiden Lenkerteilen hindurch zur Nabe des Radträgers geführt sein. Sind diese beiden (oder mehreren) Lenkerteile mit ihren anderen Enden zusammengeführt in einem gemeinsamen Befestigungselement am Fahrzeug-Aufbau befestigt, so reduziert dies den Bauaufwand und vereinfacht den Montageprozess für eine erfindungsgemäße Radaufhängung.

Um den Abrollkomfort und die Abrollakustik hinsichtlich des erfindungsgemäßen Längslenkers zu optimieren, kann es hilfreich sein, wenn das fahrzeugaufbauseitige Längslenker-Ende elastisch, bspw. in Gummi, gelagert oder befestigt wird. Mithilfe einer solchen geringfügig elastischen Befestigung oder Lagerung ist es weiterhin möglich, die Krafteinleitung auf den Längslenker flächig zu gestalten, wodurch unerwünschte Punktlasten oder Linienlasten vermieden werden. Diesem Zweck können auch Abrundungen eines Befestigungselementes für den Längslenker im Bereich einer Öffnung dieses Elements, in welche der Längslenker eingeführt ist, dienen. Weiterhin kann durch eine elastische Befestigung die aufbauseitige Lagerstelle abgedichtet und somit das Eindringen von Wasser, Schmutz und Partikeln verhindert werden. Eine solche geringfügig elastische Befestigung kann dabei besonders einfach dargestellt werden, wenn das aufbauseitige Längslenker-Ende in das starr mit dem Aufbau zu verbindende Befestigungselement einvulkanisiert wird. Versieht man den Einführbereich des Befestigungselements für den Längslenker dabei mit schrägen Wänden, die sich zur Eintrittsöffnung für den Längslenker hin verjüngen, so ist auf einfache Weise sichergestellt, dass sich auch bei hoher Längskraftbelastung gegen Fahrtrichtung nach hinten, wie sie bspw. beim Bremsen oder bei Schlagloch-Durchfahrt entstehen kann, der Längslenker und das Befestigungselement nicht voneinander trennen. Um höchste Ansprüche bzgl. Abrollkomfort und Akustik zu bedienen oder ggf. Betriebsfestigkeitsprobleme an der radträgerseitigen Befestigung des Längslenkers zu beheben, kann eine solche geringfügig elastische Befestigung des Längslenkers auch am Radträger vorgesehen sein.

Bei einer erfindungsgemäßen Fahrzeug-Radaufhängung der Schwertlenker-Bauart überlagert sich ein aus einem Bremsvorgang bei Vorwärtsfahrt resultierendes Bremsmoment an der aufbauseitigen Lagerstelle des Längslenkers gleichsinnig mit dem Einspannmoment aus der Radlast, weshalb es hier zu einer Kompensation der durch die Bremsung üblicherweise verursachten Ausfederbewegung an der Hinterachse kommen kann. Abhängig von den geometrischen Verhältnissen kann dabei eine Ausfederbewegung teilweise, vollständig oder sogar überkompensiert werden. Gegenüber einer klassisch ausgeführten Schwertlenkerachse, wie bspw. in der EP 0 136 563 B1 dargestellt, bedeutet dies, dass bei einer erfindungsgemäßen Radaufhängung die Anlenkung des Längslenkers tiefer gewählt werden kann, ohne Nachteile im Bremsnickverhalten des Fahrzeuges befürchten zu müssen. Dadurch ergeben sich zusätzliche Bauraumvorteile, die eine günstige und somit gewichtsoptimierte Strukturgestaltung des Fahrzeugaufbaues erlauben.

Die beigefügte Prinzipdarstellung zeigt ein Ausführungsbeispiel in perspektivischer Ansicht. Dabei ist mit der Bezugsziffer 1 das linke Hinterrad eines Personenkraftwagens in seiner Gesamtheit gekennzeichnet, mit aus einem auf einer Felge 1 a aufgezogenen Reifen 1 b. Die Felge 1 a ist wie üblich mit aufgrund der Ansicht von innen hier nicht sichtbaren Speichen versehen und über eine Nabe an einem Radträger 2 gegenüber diesem drehbar befestigt. Zur drehbar auf dem Radträger 2 gelagerten Nabe hin führt eine Antriebswelle 3, so dass dieses Hinterrad/Rad 1 antreibbar ist.

Der Radträger 2 ist über insgesamt vier Lenker 4, 5, 6, 7 letztlich gegenüber dem Fzg.-Aufbau geführt, d.h. diese vier Lenker 4 - 7, die mit ihrem einen Ende geeignet am Radträger 2 befestigt sind, sind mit ihrem anderen, in der Figurendarstellung freien Ende entweder direkt oder unter Zwischenschaltung eines üblichen (nicht dargestellten) Hinterachsträgers am ebenfalls nicht dargestellten Fahrzeug-Aufbau geeignet befestigt.
Bei den besagten vier Lenkern handelt es sich um drei im wesentlichen in Fzg.-Querrichtung orientierte Lenker 4, 5, 6, von denen die Lenker 4 und 5 unterhalb sowie vor bzw. hinter Radmitte am Radträger 2 angelenkt sind, und der Lenker 6 oberhalb und in Fahrtrichtung des Fahrzeugs betrachtet vor Radmitte am Radträger 2 angelenkt ist. Diese drei auch sog. Quer-Lenker 4, 5, 6 sind jeweils geeignet gelenkig sowohl am Radträger 2 als auch am Hinterachsträger bzw. Fahrzeug-Aufbau angelenkt und im wesentlichen stabförmig ausgebildet, wobei diese Querlenker 4 - 6 vorteilhafterweise nur darauf ausgelegt sein müssen, Kräfte in Lenker-Längsrichtung zu übertragen, da anders als oftmals im Stand der Technik realisiert hier keine zwischen dem Radträger 2 und dem Fahrzeug-Aufbau eingespannte Tragfeder auf einem dieser Quer-Lenker 4 -6 abgestützt ist.

Vielmehr ist ein selbstverständlich weiterhin erforderliches und auch vorhandenes Tragfederelement in den weiteren Lenker 7 integriert, der sich im wesentlichen in Fahrzeug-Längsrichtung erstreckt und beispielsweise bzw. vorzugsweise aus einem Faserverbundwerkstoff besteht, so dass dieser auch sog. Längs-Lenker 7 unter entsprechender Krafteinwirkung elastisch soweit verformbar ist, dass er die Funktion einer ansonsten üblicherweise als Stahl-Wendelfeder oder als Luftfeder ausgebildeten Tragfeder übernehmen kann. Hierfür ist dieser Längslenker 7, der vorliegend aus zwei in einem weiten Bereich einzelnen Lenkerteilen 7a, 7b besteht, die im wesentlichen in einer gemeinsamen Vertikalebene liegen, einerseits im wesentlichen starr am Radträger 2 befestigt - hier mittels jeweils zwei Schrauben 8 je Lenkerteil 7a, 7b - , und anderenends ebenfalls im wesentlichen starr am nicht dargestellten Fzg.-Aufbau befestigt, und zwar über ein Befestigungselement 9, in welchem die beiden Lenkerteile 7a, 7b geeignet zusammengeführt sind. Hier ist auch eine geringfügig elastische Befestigung möglich, indem das dem radträger 2 abgewandte Ende des Längslenkers 7 unter Zwischenschaltung einer Gummischicht im Befestigungselement fixiert, vorzugsweise einvulkanisiert ist.

Zwischen den beiden Lenkerteilen 7a, 7b ist die Antriebswelle 3 hindurch geführt. Weiterhin erkennt man unter der Bezugsziffer 10 einen im wesentlichen üblichen Schwingungsdämpfer, der funktional im Längslenker 7 integrierten Tragfeder parallel geschaltet ist und direkt zwischen dem Radträger 2 und dem Fzg.-Aufbau abgestützt ist. Jedoch kann dies sowie eine Vielzahl weiterer Details insbesondere konstruktiver Art durchaus abweichend von obigen Erläuterungen gestaltet sein, ohne den Inhalt der Patentansprüche zu verlassen.

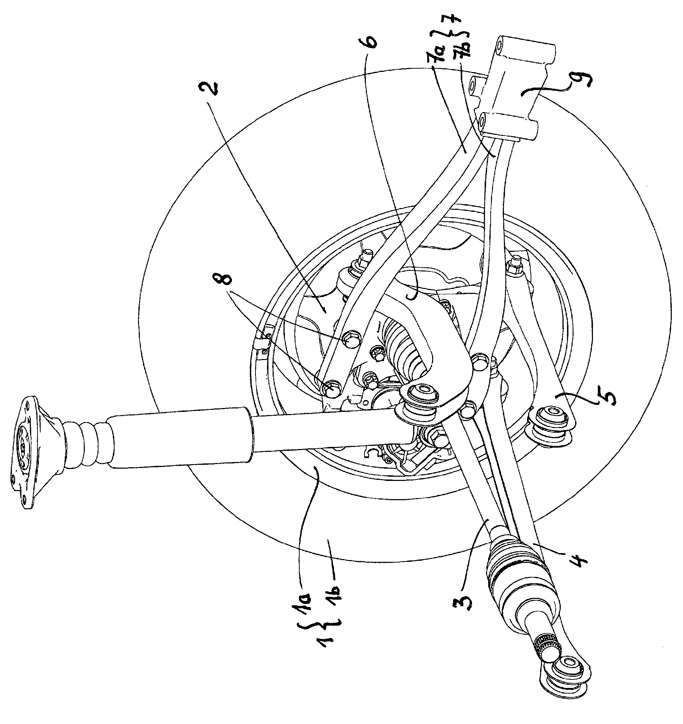

## Patentansprüche

1. Fahrzeug-Radaufhängung der Schwertlenker-Bauart mit drei im wesentlichen in Fahrzeug-Querrichtung orientierten radführenden Lenkern (4, 5, 6) sowie mit einem im wesentlichen starr am Radträger (2) befestigten und dessen Querbewegung gegenüber dem Fzg.-Aufbau kaum einschränkenden Längslenker (7), der im wesentlichen starr am Fahrzeug-Aufbau befestigt ist und damit auch die Funktion einer Tragfeder zwischen dem Radträger (2) und dem Fahrzeug-Aufbau übernimmt.

2. Fahrzeug-Radaufhängung nach Anspruch 1 mit einem Schwingungsdämpfer (10) mit integrierter Druckanschlagfeder und/oder Zuganschlagfeder, wobei mit Ausnahme dieser im Schwingungsdämpfer (10) integrierten Federn neben dem besagten Längslenker (7) kein weiteres Tragfeder-Element zwischen diesem Radträger (2) und dem Fahrzeug-Aufbau vorgesehen ist.

3. Fahrzeug-Radaufhängung nach Anspruch 1 oder 2, wobei der besagte Längslenker (7) durch zwei oder mehr in einem weiten Bereich einzelnen Lenkerteilen (7a, 7b) besteht, die im wesentlich in einer gemeinsamen Vertikalebene liegen.

4. Fahrzeug-Radaufhängung nach Anspruch 3, wobei das erste Lenkerteil (7a) des Längslenkers (7) oberhalb und das zweite Lenkerteil (7b) unterhalb der Radmitte am Radträger (2) befestigt ist und die beiden Lenkerteile (7a, 7b) mit ihren anderen Enden zusammengeführt in einem gemeinsamen Befestigungselement (9) am Fahrzeug-Aufbau befestigt sind.

5. Fahrzeug-Radaufhängung nach einem der vorangegangenen Ansprüche, wobei der Längslenker (7) in einem Faserverbundwerkstoff ausgeführt ist.

6. Fahrzeug-Radaufhängung nach einem der vorangegangenen Ansprüche, wobei der Längslenker (7) im Befestigungselement und/oder am Radträger (2) geringfügig elastisch befestigt ist.

7. Fahrzeug-Radaufhängung nach Anspruch 6, wobei die geringfügig elastische Befestigung durch Einvulkanisieren des Längslenkers (7) in eine Aufnahme dargestellt ist.

## Claims

1. A vehicle wheel suspension of the control blade type having three wheel-guiding suspension links (4, 5, 6) which are oriented substantially in the transverse direction of the vehicle and also having one trailing link (7) which is attached substantially rigidly to the wheel carrier (2) and hardly restricts the transverse movement thereof with respect to the vehicle body and is attached substantially rigidly to the vehicle body and thereby also assumes the function of a suspension spring between the wheel carrier (2) and the vehicle body.

2. A vehicle wheel suspension according to claim 1 having a vibration damper (10) with an integrated compression buffer spring and/or rebound buffer spring, wherein with the exception of these springs integrated into the vibration damper (10) and other than said trailing link (7), no further suspension spring element is provided between this wheel carrier (2) and the vehicle body.

3. A vehicle wheel suspension according to claim 1 or claim 2, wherein said trailing link (7) comprises two or more individual link parts (7a, 7b) in a wide region, which are substantially located in a common vertical plane.

4. A vehicle wheel suspension according to claim 3, wherein the first link part (7a) of the trailing link (7) is attached to the wheel carrier (2) above the middle of the wheel and the second link part (7b) is attached to the wheel carrier (2) below the middle of the wheel and the two link parts (7a, 7b) are attached to the vehicle body by their other ends, guided together in a common attachment element (9).

5. A vehicle wheel suspension according to any one of the preceding claims, wherein the trailing link (7) is formed from a fibre composite material.

6. A vehicle wheel suspension according to any one of the preceding claims, wherein the trailing link (7) is attached in the attachment element and/or to the wheel carrier (2) in a slightly resilient manner.

7. A vehicle wheel suspension according to claim 6, wherein the slightly resilient attachment is realised by vulcanising the trailing link (7) into a mount.

## Revendications

1. Suspension de roue de véhicule de type à bras en forme de lames comportant trois bras oscillants de guidage de roue (4, 5, 6) essentiellement orientés dans la direction transversale du véhicule ainsi qu'un bras oscillant longitudinal (7), fixé essentiellement rigidement sur le support de roue (2) et ne limitant que peu son mouvement transversal par rapport à la carrosserie du véhicule, qui est fixé essentiellement rigidement sur la carrosserie du véhicule et exerce ainsi également la fonction d'un ressort de support entre le support de roue (2) et la carrosserie du véhicule.

2. Suspension de roue de véhicule conforme à la revendication 1, comprenant un amortisseur d'oscillation (10) auquel est intégré un ressort de mise en butée en compression et/ou un ressort de mise en butée en traction, et, à l'exception de ces ressorts intégrés à l'amortisseur d'oscillation (10), outre le bras oscillant longitudinal (7) aucun autre élément de ressort de suspension n'est monté entre ce support de roue (2) et la carrosserie du véhicule.

3. Suspension de roue de véhicule conforme à la revendication 1 ou 2, dans laquelle le bras oscillant longitudinal (7) est constitué par deux ou un plus grand nombre d'éléments de bras (7a, 7b) indépendants dans une large plage qui sont situées essentiellement dans un plan vertical commun.

4. Suspension de roue de véhicule conforme à la revendication 3, dans laquelle le premier élément de bras (7a) du bras oscillant longitudinal (7) est fixé sur le support de roues (2) au-dessus du centre de la roue tandis que le second élément de bras (7b) est fixée sur ce support de roue (2) au-dessous du centre de la roue, et les deux éléments de bras (7a, 7b) sont rassemblés par leurs extrémités opposées en un élément de fixation (9) commun sur la carrosserie du véhicule.

5. Suspension de roue de véhicule conforme à l'une des revendications précédentes,
dans laquelle le bras oscillant longitudinal (7) est réalisé en un matériau composite à base de fibres.

6. Suspension de roue de véhicule conforme à l'une des revendications précédentes,
dans laquelle le bras oscillant longitudinal (7) est fixé de manière faiblement élastique sur l'élément de fixation et/ou sur le support de roue (2).

7. Suspension de roue de véhicule conforme à la revendication 6,
dans laquelle la fixation faiblement élastique est réalisée par vulcanisation du bras oscillant longitudinal (7) dans un logement.
